(19) Europäisches Patentamt
European Patent Office
Office européen des brevets

(11) EP 2 925 498 B1

(12) FASCICULE DE BREVET EUROPEEN

(45) Date de publication et mention
de la délivrance du brevet:
**23.11.2016 Bulletin 2016/47**

(21) Numéro de dépôt: **13780181.7**

(22) Date de dépôt: **24.09.2013**

(51) Int Cl.:
***B29C 43/22*** *(2006.01)*   ***A44B 18/00*** *(2006.01)*

(86) Numéro de dépôt international:
**PCT/FR2013/000251**

(87) Numéro de publication internationale:
**WO 2014/083245 (05.06.2014 Gazette 2014/23)**

(54) **ELEMENTS D'ACCROCHAGE MOULES ET LEUR PROCEDE DE FABRICATION**

GEFORMTE ERFASSUNGSELEMENTE UND VERFAHREN ZUR HERSTELLUNG DAVON

MOULDED CATCHING ELEMENTS AND METHOD FOR MANUFACTURING SAME

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **28.11.2012 FR 1203217**

(43) Date de publication de la demande:
**07.10.2015 Bulletin 2015/41**

(73) Titulaire: **Aplix**
**44850 Le Cellier (FR)**

(72) Inventeur: **MAHE, Anthony**
**F-44450 La Chapelle Basse Mer (FR)**

(74) Mandataire: **Eidelsberg, Olivier Nathan et al**
**Cabinet Flechner**
**22, avenue de Friedland**
**75008 Paris (FR)**

(56) Documents cités:
**US-A1- 2007 022 602     US-B1- 6 258 311
US-B1- 6 533 981**

## Description

La présente invention se rapporte à une partie mâle d'un auto-agrippant mâle-femelle (du type crochet dans boucle) ou mâle-mâle (du type crochet dans crochet), qui comporte une tige et une partie d'accrochage qui fait saillie latéralement de la tige. Il peut s'agir, en particulier, d'éléments en forme de crochet ou de champignon. La présente invention se rapporte également à des dispositifs auto-agrippants mâle-femelle ou mâle-mâle comportant un élément mâle de ce genre. La présente invention se rapporte également à un procédé de fabrication d'un élément mâle de ce genre ainsi qu'à une installation de fabrication d'éléments mâles de ce genre.

On connaît déjà dans l'art antérieur des éléments mâles en forme de crochet ou de champignon, que l'on appellera par la suite de manière générale des éléments d'accrochage, qui sont réalisés en matière thermoplastique par moulage. Le moule est constitué de cavités de forme complémentaire des éléments d'accrochage que l'on remplit de matière thermoplastique de moulage et que l'on démoule ensuite en les extirpant des cavités.

En ce qui concerne les champignons, seuls ceux ayant une tête très mince peuvent être fabriqués de cette manière. L'inconvénient est que l'accrochage n'est alors pas très résistant aux différentes contraintes, notamment à la traction de pelage lorsque le champignon constitue une des parties d'un auto-agrippant. En effet, si on souhaite obtenir une tête épaisse, on ne peut plus l'extirper de la cavité de moulage. En ce qui concerne les éléments d'accrochage ayant une forme de crochet, il est un peu plus aisé d'en fabriquer par moulage que des champignons. Cependant, la nécessité de pouvoir les extirper de la cavité de moulage entraîne des contraintes sur la fabrication en termes de forme et de matière, en particulier, qui font que les crochets obtenus ont une qualité d'accrochage médiocre. En particulier, on aimerait pouvoir réaliser des crochets de ce genre en matériau thermoplastique amorphe ou sensiblement amorphe, c'est-à-dire comportant dans la matière un pourcentage notable de matériau thermoplastique amorphe rigide. Or, ces matériaux étant particulièrement rigides (en ayant un module de flexion au moins égal à 1000 Mpa, en particulier supérieur à 1200 Mpa, notamment supérieur à 1500 Mpa, voire 2000 MPa), il est impossible d'en faire des crochets par un démoulage consistant en une simple éjection de la cavité de moulage (alors même que ce genre de démoulage est particulièrement favorable pour des fabrication à grande échelle), les crochets étant trop dégradés après avoir été extirpés ou éjectés du moule pour avoir le moindre pouvoir d'accrochage.

La présente invention vise à surmonter les inconvénients de l'art antérieur en proposant un procédé qui permet de fabriquer par moulage par éjection ou extirpation hors de la cavité de moulage des éléments mâles ou d'accrochage du genre mentionné ci-dessus en un matériau thermoplastique amorphe ou sensiblement amorphe, ce qui est très favorable en terme de production industrielle à grande échelle. Suivant l'invention, un procédé de fabrication d'un élément d'accrochage comportant une partie de tige s'étendant à partir d'une bande de base suivant un axe de tige transversal à la bande de base et une partie d'accrochage faisant saillie latéralement de la tige dans une direction transversale par rapport à l'axe de tige, qui comporte les étapes suivantes :

- on prévoit une cavité de moulage de forme complémentaire de l'élément d'accrochage ;

- on introduit la matière thermoplastique de moulage sous une forme qui peut s'écouler, notamment visqueuse ou pâteuse, dans la cavité de moulage ;

- on règle la température de la matière thermoplastique à l'intérieur de la cavité de moulage à une valeur Tmould comprise entre Tg - ΔTg et Tg + ΔTg, Tg étant la température de transition vitreuse de la matière thermoplastique et ΔTg étant égale à environ 30°C, de préférence à environ 15°C ;

- on démoule l'élément à cette température Tmould ; et

- on laisse refroidir l'élément démoulé à une température inférieure à Tmould, notamment à la température ambiante.

Suivant un mode de réalisation préféré, la matière thermoplastique est amorphe ou sensiblement amorphe et ΔTg est égal à environ 15°C.

De préférence, on règle la température Tmould de la matière thermoplastique à l'intérieur de la cavité de moulage en portant la cavité de moulage à la température Tmould.

De préférence, la matière thermoplastique est introduite dans la cavité de moulage en étant à une température Tintro supérieure à la température Tmould et on laisse la température de la matière atteindre la température Tmould de la cavité de moulage avant d'entamer l'étape de démoulage.

La présente invention se rapporte également à un élément d'accrochage, notamment un crochet ou un champignon, d'un dispositif auto-agrippant mâle-femelle ou mâle-mâle, qui comporte une partie de tige et une partie d'accrochage, la partie de tige s'étendant suivant un axe transversal à une bande de base et la partie d'accrochage faisant saillie latéralement de la partie de tige, caractérisé en ce que au moins la partie d'accrochage est constituée d'une matière thermoplastique ayant un module de flexion supérieur à 1000 MPa, notamment supérieur à 1200 MPa, en particulier supérieur à 1500 MPa à 25°C, l'élément à crochet étant réalisé par moulage, notamment moulage par injection, et lorsque l'on trace le thermogramme pour l'élément d'accrochage, c'est-à-dire lorsqu'on effectue une calorimétrie différentielle à balayage, on constate à la première montée en température une absence ou quasi absence d'enthalpie de relaxation au voisinage de la transition vitreuse.

De préférence, la partie de tige est également constituée d'une matière thermoplastique ayant un module de flexion supérieur à 1000 MPa, notamment supérieur à 1200 MPa, en particulier supérieur à 1500 Mpa à 25°C, notamment est constituée de la même matière que la partie d'accrochage. Suivant un mode de réalisation préféré de l'invention, le matériau thermoplastique est un matériau amorphe ou sensiblement amorphe.

De préférence, le matériau a un module de flexion supérieur à 1500 Mpa à 25°C.

Ainsi, suivant l'invention, on a réussi pour la première fois à fabriquer un élément d'accrochage en un matériau thermoplastique très rigide, notamment amorphe, ayant une bonne qualité d'accrochage par une étape de moulage comportant un démoulage par éjection ou extirpation, particulièrement favorable pour une production à grande échelle.

Suivant un mode de réalisation préféré de l'invention, le matériau thermoplastique amorphe comporte un ABS (Acrylonitrile Butadiène Styrène), un PC(Polycarbonate), un PVC(Polychlorure de Vinyle), un PEI(Polyétherimide), un PES(Polyether Sulfone), un PMMA (Polyméthacrylate de méthyle), un PA (Polyamide) 6,6 et/ou un PS(Polystyrène).

Suivant un mode de réalisation préféré de l'invention, l'élément d'accrochage a la forme d'un champignon, et notamment la partie de tête fait saillie latéralement de la partie de tige sur 360° autour de la partie de tige.

En particulier, suivant un mode de réalisation préféré de l'invention, la partie d'accrochage fait saillie latéralement de la section de tige en au moins trois secteurs angulaires à distance angulairement les uns des autres.

De préférence, l'absence ou quasi absence d'enthalpie de relaxation correspond sur la courbe DSC à une enthalpie de relaxation massique inférieure ou égale à 1 J/g, l'enthalpie de relaxation massique étant le rapport de l'aire entre la courbe à la première montée et la courbe à la deuxième montée en température dans une zone allant de Tg à Tg -30°C, divisée par la masse de l'échantillon.

De préférence, l'absence ou quasi absence d'enthalpie de relaxation correspond à l'absence d'un pic ou point maximum pour la courbe de première montée en température de la DSC dans une zone comprise entre Tg et Tg-30°.

Suivant l'invention, on entend par matériau amorphe un matériau dont le taux de cristallinité au sein de la matière est de 0%.

Suivant l'invention, on entend par sensiblement amorphe une matière comportant des zones amorphes et des zones non amorphes, les zones amorphes représentant plus de la moitié du volume du matériau considéré. De préférence, il représente plus de 60%, encore plus préférablement plus de 70%, très préférentiellement plus de 80%, de manière très avantageuse plus de 95%.

A titre d'exemple, on décrit maintenant des modes de réalisation préférés de l'invention en se reportant aux dessins, dans lesquels :

- la figure 1 représente vu de côté un crochet suivant l'invention ;

- les figures 2a et 2b représentent vu de côté de dessus un élément à crochet en forme de champignon suivant l'invention ;

- la figure 3 représente vu de dessus un élément à crochet d'un autre mode de réalisation de l'invention ;

- la figure 4 représente vu de dessus un élément à crochet suivant encore un mode de réalisation ;

- les figure 5A, 5B, 5C, 5D et 5E représentent la courbe de DSC (calorimétrie différentielle à balayage ou Differential Scan calorimetry) à la première montée en température pour un élément d'accrochage suivant l'invention respectivement en ABS, PS, PA 6.6, PMMA et PC;

- les figures 6A, 6B et 6C représentent les mêmes courbes respectivement qu'aux figures 5A 5B et 5C pour un élément obtenu par un procédé de l'art antérieur dans lequel le démoulage ne s'effectue pas comme suivant l'invention ; et

- les figures 7A et 7B sont des photographies d'un crochet en ABS réalisé respectivement par un procédé de démoulage de l'art antérieur et par le procédé de l'invention.

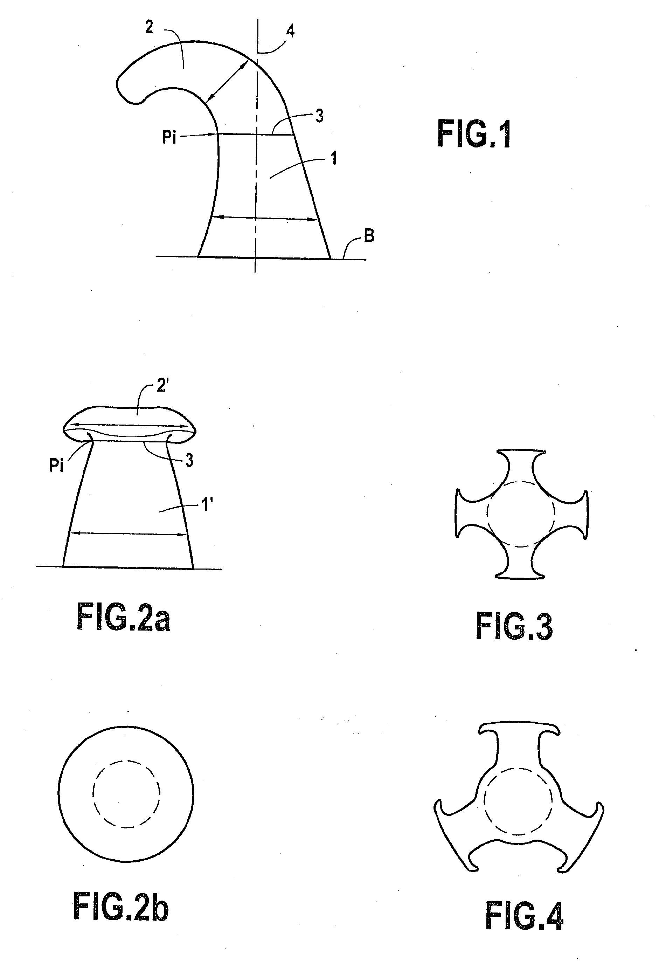

A la figure 1, il est représenté un mode de réalisation d'un crochet suivant l'invention. Ce crochet est constitué d'une partie 1 formant tige issue d'une bande B de base, et d'une partie 2 de tête qui fait saillie latéralement de la partie 1 de tige.

La partie 1 de tige s'étend suivant un axe sensiblement vertical, à savoir perpendiculaire à la bande B de base. Cependant, suivant d'autres modes de réalisation, on peut envisager que cette direction soit inclinée par rapport à la perpendiculaire à la bande B de base. Pour définir la délimitation 3 entre la tige et la partie d'accrochage, constituée par un plan de coupe parallèle à la bande B de base à la figure 1, on définit suivant l'invention la section transversale parallèle au plan B de base de la partie de crochet et suivant l'invention on définit la délimitation entre la partie de tête et la partie de base comme étant le plan 3 à partir duquel le point Pi de la section transversale, qui est son point le plus à l'extérieur de la section transversale du côté vers lequel le crochet s'étend (ici à la figure 1 le côté gauche), se trouve le plus vers la droite. Une fois cette section 3 transversale déterminée, on considère suivant l'invention que la partie de tige est la partie du crochet qui se trouve en dessous de cette section 3 transversale et la partie de crochet est la partie 2 qui se trouve au-dessous de cette section 3 transversale.

Aux figures 2a et 2b, il est représenté un élément mâle suivant l'invention sous la forme d'un champignon. Comme on le voit à la figure 2a, il est constitué également d'une partie 1' de tige et d'une partie 2' de tête, le point Pi étant représenté à la figure comme étant le plus à gauche de la section 3 à partir de laquelle ce point Pi commence de nouveau à se déplacer vers la gauche à la figure. Suivant ce mode de réalisation qui est symétrique de révolution par rapport à l'axe vertical, l'ensemble des points de la section 3 sont des points Pi.

A la figure 2b, on voit de dessus le champignon de la figure 2a.

Aux figures 3 et 4, sont représentés des modes de réalisation différents, dans lesquels le crochet a une tige identique à celle du champignon de la figure 2a, mais en revanche sa partie de tête ne fait saillie latéralement de la tige que suivant des secteurs angulaires (quatre sections angulaires à la figure 3, trois secteurs angulaires à la figure 4).

Le procédé suivant l'invention permet, avantageusement, de fabriquer par moulage des crochets comme décrits aux figures 1 à 4, et encore plus remarquablement des champignons comme aux figures 2a, 2b, 3 et 4, par moulage, et notamment moulage par injection, malgré la difficulté liée à l'existence de la partie de tête que l'on doit démouler. Ainsi, suivant l'invention, le procédé pour fabriquer de tels crochets consiste à prendre une cavité de moulage de la forme complémentaire du crochet ou du champignon à réaliser, à introduire dans la cavité de moulage de la matière thermoplastique amorphe, par exemple du PEI, du PES, du PVC, du polystyrène, de l'ABS, etc.

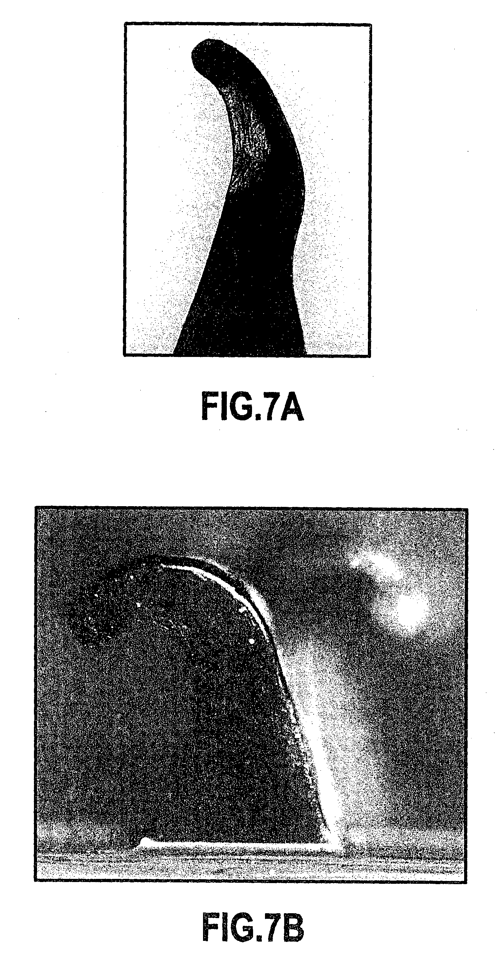

On porte, par des moyens de chauffage, la cavité de moulage à une température Tmould qui est sensiblement égale à la température de transition vitreuse (Tg) de la matière thermoplastique, en étant comprise dans une plage allant de Tg - 20 à 30°(de préférence 10 à 15°) jusqu'à Tg + 20 à 30° (de préférence de 10 à 15°). La matière ayant été introduite à une température Tintro plus élevée que Tmould, on la laisse atteindre cette température Tmould, puis on démoule le crochet à cette température Tmould. On laisse ensuite refroidir à température ambiante le crochet. Il s'avère que le crochet obtenu s'est parfaitement démoulé (voir par exemple la figure 7B), et en particulier, contrairement à l'art antérieur, n'a pas été déformé ou détérioré (voir la figure 7B) par le démoulage par rapport à la forme complémentaire de la cavité de moulage. On a ainsi pu réaliser des crochets ayant des parties d'accrochage très crochues ainsi que des champignons dont la partie de tête fait saillie latéralement de tout le pourtour de la tige avec une grande épaisseur de cette tête, sans que cela ne pose le moindre problème de détérioration du crochet lors du démoulage.

Comme moyen de chauffage, on peut prévoir des résistances chauffantes, des systèmes d'induction, un circuit de régulation par fluide tel que de l'eau ou de l'huile, et tout autre système analogue bien connu dans le domaine.

Ainsi, par le procédé suivant l'invention, on peut réaliser des crochets du genre ci-dessus, notamment des crochets ayant une grande capacité d'accrochage, et des champignons, par moulage par éjection ou extirpation, ce qui est particulièrement adapté à des fabrications à grande échelle.

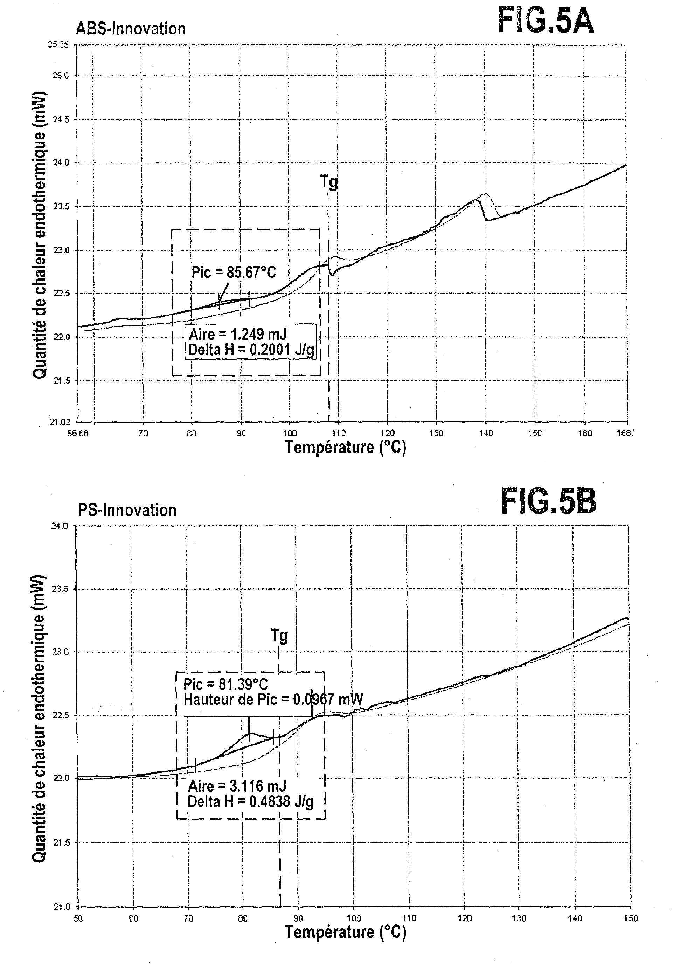

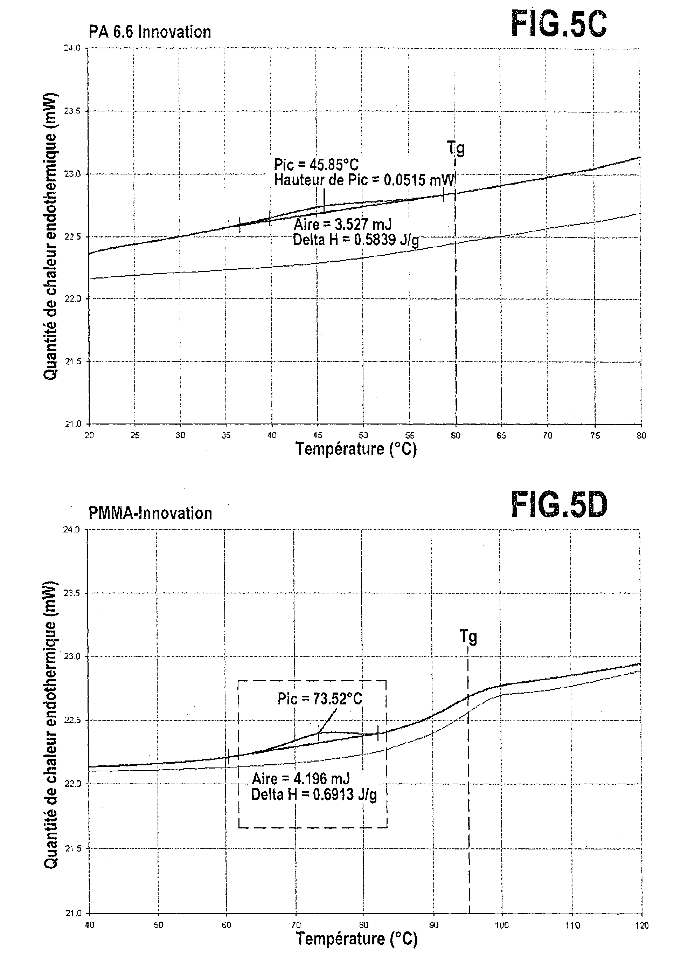

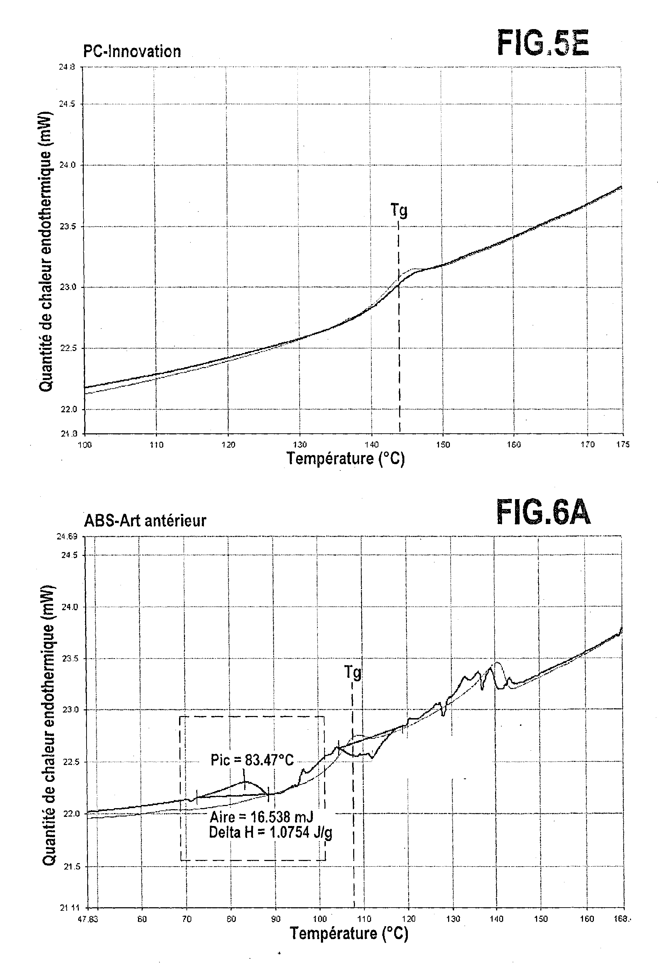

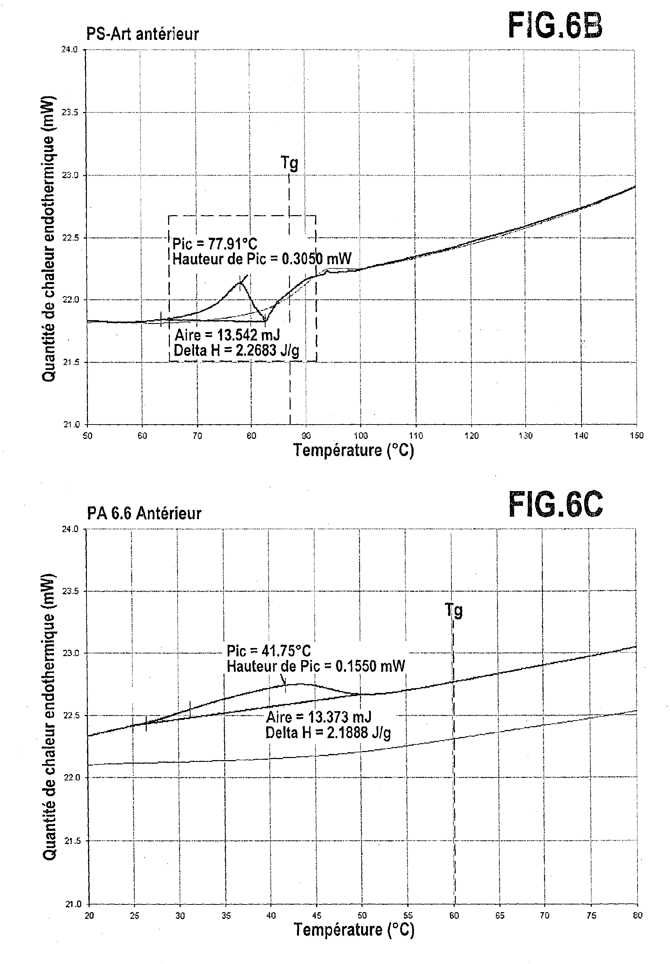

Aux figures 5A, 5B, 5C, 5D, 5E, 6A et 6B il est représenté une manière de mettre en évidence le fait que le crochet suivant l'invention a été fabriqué par le procédé suivant l'invention (Figures 5A, 5B, 5C, 5D et 5E) et en particulier n'a pas été, contrairement à l'art antérieur (Figures 6A et 6B), détérioré par l'opération de démoulage. Il est à noter que pour les matériaux des figures 5D et 5E (PMMA et PC) il n'est même pas possible de les démouler par un procédé de l'art antérieur.

Ainsi il est représenté une DSC, respectivement aux figures 5A, 5B, 5C, 5D et 5E, pour un crochet suivant l'une quelconque des figures 1 à 4 respectivement en ABS, PS, PA 6,6, PMMA et PC et aux figures 6A, 6B et 6C pour un crochet respectivement en ABS, PS et PA 6,6 qui n'a pas été démoulé à la température prévue suivant l'invention.

La DSC est une courbe qui donne la variation de quantité de chaleur instantanée de la quantité de chaleur à apporter pour obtenir une augmentation de la température en fonction de la température.

Les fortes déformations qu'un élément d'accrochage subit lors de son démoulage laissent des contraintes résiduelles au sein de la matière le constituant. Lors d'une DSC, pour une plage de température située autour de Tg, le matériau a besoin d'un apport de chaleur important pour supprimer ces contraintes et poursuivre sa montée en température. Il s'agit donc d'un phénomène endothermique, l'échantillon absorbant de la chaleur, cette absorption étant caractérisée par un pic, pic qui n'apparaît plus ou quasiment plus à une nouvelle montée en température, les contraintes ayant été fortement diminuées voire supprimées.

A la figure 5A, il est représenté la courbe obtenue pour un crochet en ABS suivant l'invention lors d'une première montée de température, c'est-à-dire lorsqu'on fait varier la température de 10 à 200° Celsius à une vitesse fixe de 10°C/min.

Comme on peut le voir à la figure 6A, au premier passage, on obtient avant la température de transition vitreuse et au voisinage de celle-ci un pic ou « peak », c'est-à-dire un point pour lequel la dérivée de la courbe est nulle et correspond à un maximum local (caractérisant une enthalpie de relaxation et une réaction endothermique). Au contraire, suivant l'invention il n'y a pas ou quasiment pas un tel point maximum au niveau de la transition vitreuse (voir la figure 5A).

On entend par quasi absence de pic ou point maximum au voisinage de la transition vitreuse (et donc un quasi absence d'enthalpie de relaxation) le fait que la courbe de la DSC, est sensiblement rectiligne, et notamment l'aire de la zone comprise entre la courbe au premier passage et la courbe au deuxième passage par unité de masse (Delta H) qui est inférieure à 1 J/g.

Dans le procédé suivant l'invention, on peut porter la cavité de moulage à la température prévue pour le démoulage (c'est-à-dire au voisinage de Tg) avant ou après l'introduction de la matière de moulage dans la cavité.

Lors de la mise en oeuvre des courbes de montée en température pour la DSC, et notamment comme on peut le voir aux figures 5A à 5E et 6A à 6C, il est représenté la courbe à la première montée en température (en traits épais) et la courbe à la deuxième montée en température (en traits fins). La courbe à la deuxième montée est décalée vers le bas car lors de la deuxième montée, les crochets ayant déjà été fondus une fois (à la première montée), le contact avec l'appareil est bien meilleur et moins d'énergie est nécessaire pour chauffer l'échantillon, entraînant ce décalage dès l'origine.

Ainsi, pour calculer l'enthalpie massique de relaxation au voisinage du pic, on remonte préalablement la courbe de deuxième montée pour l'adapter à la courbe de première montée. On obtient ainsi aux figures 5A à 5E et 6A à 6C sur le segment [Tg-30° ; Tg] la courbe adaptée, également en traits épais, s'étendant sous la courbe de première montée et formant avec elles une boucle fermée dont on mesure la surface pour calculer l'enthalpie.

En particulier, on définit l'enthalpie massique de relaxation au voisinage du pic comme étant l'intégrale entre Tg-30° et Tg de la différence entre les courbes respectivement de première montée en température et de seconde montée en température adaptée pour tenir compte du décalage décrit ci-dessus, divisée par la masse de l'échantillon. Cette intégrale de la différence correspond à l'aire définie d'une part en haut et en bas par les deux courbes de première et deuxième montée respectivement et d'autre part à gauche et à droite par les droites verticales correspondant à T=Tg et T=Tg-30°.

A la figure 5A, le delta H est de 0,2001 J/g tandis qu'à la figure 6A le delta H est de 1,754 J/g.

A la figure 5B, le delta H est de 0,4838 J/g tandis qu'à la figure 6B le delta H est de 2,2683 J/g.

A la figure 5C, le delta H est de 0,5839 J/g tandis qu'à la figure 6C le delta H est de 2,188 J/g.

A la figure 5D, le delta H est de 0,6913 J/g (pas de courbe possible suivant l'art antérieur).

A la figure 5E, le delta H est de 0 J/g (pas de courbe possible suivant l'art antérieur).

A la figure 7A, il est représenté un crochet en ABS de l'art antérieur, qui est fortement détérioré en raison du démoulage, alors qu'à la figure 7B le crochet en ABS a été démoulé comme suivant l'invention et n'est pas détérioré. Ces deux figures sont données à titre d'illustration de l'effet de l'invention et ne sont pas destinées à limiter la portée de la présente demande de brevet, qui n'est définie que par les revendications à la lumière de la description. En particulier, il peut arriver que un crochet de l'invention soit légèrement déformé lors de son démoulage mais conserve cependant dans l'ensemble ses propriétés d'accrochage sans être parfaitement complémentaire de forme de sa cavité de moulage. Pour savoir si un élément d'accrochage est comme suivant l'invention ou comme suivant l'art antérieur, ce qui compte c'est l'analyse DSC et pas la simple analyse visuelle de cet élément.

Les conditions exactes de la mise en oeuvre de la DSC sont les suivantes :

DSC utilisé : Pyris Perkin-Elmer

Atmosphère : Azote

Coupelle d'essai : aluminium avec couvercle non étanche Découpe des crochets : les crochets sont découpés au scalpel au centre de la plaque. Ils sont découpés à leur base sans prélever de matière de la plaque.

Masse des échantillons : 6 mg (à + ou - 1 mg)

Positionnement des crochets dans la coupelle : les crochets sont posés à plat dans le fond de la coupelle afin d'avoir un maximum de surface de la matière analysée en contact avec le fond de la coupelle.

Programmation du cycle en température :

Vitesse de chauffage : 10°C/mn
Domaine de température : 5°C à 225°C

Cycle en température :

1. Isotherme à 5°C pendant 2 mn
2. Chauffage de 5 à 200°C à 10°C/mn
3. Isotherme à 200°C pendant 2 mn
4. Refroidissement de 200 à 5°C à 200°C/mn
5. Isotherme à 5°C pendant 2 mn
6. Chauffage de 5 à 200°C à 10°C/mn
7. Isotherme à 200°C pendant 2 mn

Traitement des résultats :

Mesure de la température de transition vitreuse (Tg) par la méthode des tangentes.

Mesure de l'enthalpie de relaxation lors des deux passages en chauffage et comparaison entre les deux, aux alentours de la Tg (pic endothermique).

Les conditions exactes pour la mesure du module de flexion sont les suivantes :

L'essai est réalisé selon la norme NF EN ISO 178 : Plastiques, détermination des propriétés en flexion.

Une éprouvette, supportée comme une poutre, est soumise à une flexion au milieu de la portée, à une vitesse constante, jusqu'à la rupture de l'éprouvette ou jusqu'à ce que la déformation ait atteinte une valeur prédéterminée. Durant cet essai, la charge supportée par l'éprouvette est mesurée'. Les ratios spécifiés par la norme, c'est-à-dire l/h = 20 (+/-1), avec l la longueur et h l'épaisseur doivent être respectés.

La contrainte en flexion à la limite élastique est calculée selon la formule :

$$\sigma = (3FL) / (2bh^2)$$

avec F la charge en Newtons à 0.002 de déformation(□), **L** la portée en mm sur le montage, b la largeur et **h** l'épaisseur de l'éprouvette.

Le module de flexion est ensuite calculé grâce à la formule :

$$E = \sigma / \square$$

## Revendications

1. Elément d'accrochage d'un dispositif auto-agrippant mâle-femelle ou mâle-mâle, qui comporte une partie de tige et une partie d'accrochage, la partie de tige s'étendant suivant un axe transversal à une bande de base et la partie d'accrochage faisant saillie latéralement de la partie de tige, **caractérisé en ce que** au moins la partie d'accrochage est constituée d'une matière thermoplastique ayant un module de flexion supérieur à 1000 MPa, notamment supérieur à 1200 MPa, en particulier supérieur à 1500 MPa à 25°C, l'élément d'accrochage étant réalisé par moulage, notamment moulage par injection, et lorsque l'on trace le thermogramme pour le crochet, c'est-à-dire lorsqu'on effectue une calorimétrie différentielle à balayage, on constate à la première montée en température une absence ou quasi absence d'enthalpie de relaxation au voisinage de la transition vitreuse.

2. Elément suivant la revendication 1, **caractérisé en ce que** l'absence ou quasi absence d'enthalpie de relaxation correspond sur la courbe DSC à une enthalpie de relaxation massique inférieure ou égale à 1 J/g, l'enthalpie de relaxation massique étant le rapport de l'aire entre la courbe à la première montée et la courbe à la deuxième montée en température dans une zone allant de Tg à Tg-30°C, divisée par la masse de l'échantillon.

3. Elément suivant la revendication 1 ou 2, **caractérisé en ce que** l'absence ou quasi absence d'enthalpie de relaxation correspond à l'absence d'un pic ou point maximum pour la courbe de première montée en température de la DSC dans une zone comprise entre Tg et Tg-30°.

4. Elément suivant l'une des revendications 1 à 3, **caractérisé en ce que** la partie de tige est également constituée d'une matière thermoplastique ayant un module de flexion supérieur à 1000 MPa, notamment supérieur à 1200 MPa, en particulier supérieur à 1500 Mpa à 25°C, notamment est constituée de la même matière que la partie d'accrochage.

5. Elément suivant l'une des revendications 1 à 4, **caractérisé en ce que** le matériau thermoplastique est un matériau amorphe ou sensiblement amorphe.

6. Elément suivant l'une des revendications précédentes, **caractérisé en ce que** le matériau, a un module de flexion supérieur à 1500 Mpa à 25°C.

7. Elément suivant l'une des revendications 5 ou 6, **caractérisé en ce que** le matériau thermoplastique amorphe est choisi dans la liste comportant l'ABS, le PC, le PMMA, le PVC, le PEI, le PES et le polystyrène.

8. Elément suivant l'une des revendications précédentes, **caractérisé en ce que** l'élément a la forme d'un champignon, et notamment la partie de tête fait saillie latéralement de la partie de tige sur 360° autour de la partie de tige.

9. Elément suivant l'une des revendications précédentes, **caractérisé en ce que** la partie d'accrochage fait saillie latéralement de la section de tige en au moins trois secteurs angulaires à distance angulairement les uns des autres.

10. Procédé de fabrication d'un élément d'accrochage comportant une partie de tige s'étendant à partir d'une bande de base suivant un axe de tige transversal à la bande de base et une partie d'accrochage faisant saillie latéralement de la tige dans une direction transversale par rapport à l'axe de tige, qui comporte les étapes suivantes :

- on prévoit une cavité de moulage de forme complémentaire de l'élément d'accrochage ;
- on introduit la matière thermoplastique de moulage sous une forme qui peut s'écouler, notamment visqueuse ou pâteuse, dans la cavité de moulage ;

- on règle la température de la matière thermoplastique à l'intérieur de la cavité de moulage à une valeur Tmould comprise entre Tg - ΔTg et Tg + ΔTg, Tg étant la température de transition vitreuse de la matière thermoplastique et ΔTg étant égale à environ 30°C, de préférence à environ 15°C ;

- on démoule l'élément à cette température Tmould ; et on laisse refroidir l'élément démoulé à une température inférieure à Tmould, notamment à la température ambiante.

**Patentansprüche**

1. Ein Kopplungselement einer selbstgreifenden Vorrichtung des Typs männlich-weiblich oder männlich-männlich, die einen Schaft- und einen Kopplungsbereich umfasst, wobei sich der Schaftbereich entlang der Querachse eines Basisbandes befindet und der Kopplungsbereich durch seitliche Erhebungen an dem Schaftbereich gebildet ist, **dadurch gekennzeichnet, dass** mindestens der Kopplungsbereich aus einem thermoplastischen Material gebildet ist, das ein Elastizitätsmodul von über 1.000 MPa, insbesondere über 1.200 MPa, vorzugsweise über 1.500 MPa bei 25°C besitzt, wobei das Kopplungselement mittels Urformen, insbesondere Spritzgießen hergestellt ist, und aus einem Thermogramm des Hakens, das heißt, durch Durchführen einer dynamischen Differenzkalorimetrie, ersichtlich ist, dass bei einem ersten Hochfahren der Temperatur keine oder praktisch keine Relaxationsenthalpie in der Nähe des Glasübergangspunktes auftritt.

2. Ein Element gemäß Anspruch 1, **dadurch gekennzeichnet, dass** das Fehlen oder praktische Fehlen einer Relaxationsenthalpie auf der DSC-Kurve einer spezifischen Relaxationsenthalpie geringer oder gleich 1 J/g entspricht, wobei die spezifische Relaxationsenthalpie dem Verhältnis der Fläche der Kurve beim ersten Temperaturanstieg zu der Kurve beim zweiten Temperaturanstieg in einem Bereich von $T_G$ bis zu $T_G$-30°C entspricht, geteilt durch die Masse der Probe.

3. Ein Element gemäß Anspruch 1 oder 2, **dadurch gekennzeichnet, dass** aufgrund des Fehlens oder praktischen Fehlens einer Relaxationsenthalpie kein Peak oder Maximalpunkt für die Kurve des ersten Temperaturanstiegs der dynamischen Differenzkalorimetrie in einem Bereich zwischen $T_G$ und $T_G$-30° zu verzeichnen ist.

4. Ein Element gemäß einem der Ansprüche 1 bis 3, **dadurch gekennzeichnet, dass** der Schaftbereich ebenfalls aus einem thermoplastischen Material gebildet ist, das ein Elastizitätsmodul von über 1.000 MPa, insbesondere über 1.200 MPa, vorzugsweise über 1.500 MPa bei 25°C besitzt, und insbesondere aus demselben Material gebildet ist wie der Kopplungsbereich.

5. Ein Element gemäß einem der Ansprüche 1 bis 4, **dadurch gekennzeichnet, dass** das thermoplastische Material ein amorphes oder ein im Wesentlichen amorphes Material ist.

6. Ein Element gemäß einem der vorhergehenden Ansprüche, **dadurch gekennzeichnet, dass** das Material ein Elastizitätsmodul von über 1.500 MPa bei 25°C besitzt.

7. Ein Element gemäß einem der Ansprüche 5 oder 6, **dadurch gekennzeichnet, dass** das amorphe thermoplastische Material ein Acrylnitril-Butadien-Styrol, ein Polykarbonat, ein Polymethylmethacrylat, ein Polyvinylchlorid, ein Polyetherimid, ein Polyethersulfon oder ein Polystyrol ist.

8. Ein Element gemäß einem der vorhergehenden Ansprüche, **dadurch gekennzeichnet, dass** das Element die Form eines Pilzes hat, und besonders der Kopfteil seitlich um 360° um den Schaftbereich herum angeordnet ist.

9. Ein Element gemäß einem der vorhergehenden Ansprüche, **dadurch gekennzeichnet, dass** der Kopplungsbereich seitlich aus dem Schaftabschnitt in mindestens drei Winkelsektoren, die winkelförmig zueinander angeordnet sind, herausragt.

10. Ein Herstellungsverfahren eines Kopplungselements, das einen Schaftbereich, der sich von einem Basisband entlang einer Schaftachse erstreckt, die quer zu dem Basisband verläuft, und einen Kopplungsbereich, der seitlich aus dem Schaftbereich quer zur Schaftachse herausragt, umfasst, mit den folgenden Phasen:

   - ein Formhohlraum wird vorgesehen, dessen Form komplementär mit dem Kopplungselement ist;
   - das thermoplastische Urformmaterial wird in den Formhohlraum eingeführt in einer Form, die fließen kann, insbesondere zähflüssig oder pastös;
   - die Temperatur des thermoplastischen Materials wird im Inneren des Formhohlraums auf einen Wert $T_{Form}$, der sich zwischen $T_g$ - $\Delta T_g$ und $T_g + \Delta T_g$ befindet, geregelt, wobei $T_g$ die Glasübergangstemperatur des thermoplastischen Materials ist und etwa 30°C, vorzugsweise etwa 15°C beträgt;
- das Element wird bei dieser Temperatur $T_{Form}$ entformt; und das entformte Element wird bei einer Temperatur, die niedriger ist als $T_{Form}$, insbesondere bei Raumtemperatur, abgekühlt.

## Claims

1. A catching element of a male-female or male-male touch-and-close device which comprises a shank part and a catching part, the shank part extending along an axis transverse to a base band and the catching part protruding laterally from the shank part, **characterized in that** at least the catching part is made of a thermoplastic having a flexural modulus greater than a 1000 MPa, notably greater than 1200 MPa, particularly greater than 1500 MPa at 25°C, the catching element being produced by molding, notably injection molding, and when the thermogram for the hook is plotted, namely when differential scanning calorimetry is performed, an absence or near-absence of relaxation enthalpy in the vicinity of the glass transition is noticed at the first rise in temperature.

2. The element as claimed in claim 1, **characterized in that** the absence or near-absence of relaxation enthalpy corresponds on the DSC curve to a specific relaxation enthalpy less than or equal to 1 J/g, the specific relaxation enthalpy being the ratio of the area between the curve on the first temperature rise and the curve on the second temperature rise in a zone ranging from Tg to Tg-30°C, divided by the mass of the sample.

3. The element as claimed in claim 1 or 2, **characterized in that** the absence or near-absence of relaxation enthalpy corresponds to the absence of a peak or maximum point for the curve of the first rise in temperature of the DSC in a zone comprised between Tg and Tg-30°C.

4. The element as claimed in one of claims 1 to 3, **characterized in that** the shank part is also made of a thermoplastic having a flexural modulus greater than 1000 MPa, notably greater than 1200 MPa, particularly greater than 1500 MPa at 25°C, notably is made of the same material as the catching part.

5. The element as claimed in one of claims 1 to 4, **characterized in that** the thermoplastic is an amorphous or substantially amorphous material.

6. The element as claimed in one of the preceding claims, **characterized in that** the material has a flexural modulus greater than 1500 MPa at 25°C.

7. The element as claimed in one of claims 5 and 6, **characterized in that** the amorphous thermoplastic is chosen from the list comprising ABS, PC, PMMA, PVC, PEI, PES and polystyrene.

8. The element as claimed in one of the preceding claims, **characterized in that** the element has the shape of a mushroom, and notably the head part protrudes laterally from the shank part over 360° around the shank part.

9. The element as claimed in one of the preceding claims, **characterized in that** the catching part protrudes laterally from the shank section in at least three angularly separated angular sectors.

10. A method of manufacturing a catching element comprising a shank part extending from a base band along a shank axis transverse to the base band and a catching part protruding laterally from the shank in a direction transverse to the axis of the shank, which method comprises the following steps:

    - a molding cavity of a shape that complements the catching element is provided;
    - the molding thermoplastic is introduced into the molding cavity in a form that can flow, notably in a viscous or pasty form;
    - the temperature of the thermoplastic inside the molding cavity is regulated to a value Tmold comprised between Tg - $\Delta$Tg and Tg + $\Delta$Tg, Tg being the glass transition temperature of the thermoplastic and $\Delta$Tg being equal to about 30°C, preferably to about 15°C;
    - the element is demolded at this temperature Tmold; and
    - the demolded element is left to cool at a temperature lower than Tmold, notably at ambient temperature.

FIG.1

FIG.2a

FIG.3

FIG.2b

FIG.4

## FIG.5A

ABS-Innovation

## FIG.5B

PS-Innovation

## FIG.5C

PA 6.6 Innovation

Pic = 45.85°C
Hauteur de Pic = 0.0515 mW

Aire = 3.527 mJ
Delta H = 0.5839 J/g

Tg

Quantité de chaleur endothermique (mW)

Température (°C)

## FIG.5D

PMMA-Innovation

Pic = 73.52°C

Aire = 4.196 mJ
Delta H = 0.6913 J/g

Tg

Quantité de chaleur endothermique (mW)

Température (°C)

## FIG.5E

PC-Innovation

## FIG.6A

ABS-Art antérieur

## FIG.6B

PS-Art antérieur

## FIG.6C

PA 6.6 Antérieur

FIG.7A

FIG.7B